(19) Europäisches Patentamt
European Patent Office
Office européen des brevets

(11) Veröffentlichungsnummer: **0 208 331 B1**

# (12) EUROPÄISCHE PATENTSCHRIFT

(45) Veröffentlichungstag der Patentschrift: **20.12.89**

(51) Int. Cl.⁴: **C 09 B 62/25**, C 09 B 62/513, D 06 P 1/38

(21) Anmeldenummer: **86109477.9**

(22) Anmeldetag: **23.07.84**

(60) Veröffentlichungsnummer der früheren Anmeldung nach Art. 76 EPÜ: **0134193**

## (54) Reaktivfarbstoffe, deren Herstellung und Verwendung.

(30) Priorität: **29.07.83 CH 4170/83**

(43) Veröffentlichungstag der Anmeldung: **14.01.87 Patentblatt 87/3**

(45) Bekanntmachung des Hinweises auf die Patenterteilung: **20.12.89 Patentblatt 89/51**

(84) Benannte Vertragsstaaten: **CH DE FR GB IT LI**

(56) Entgegenhaltungen:
**EP-A-0 084 314**
**DE-A-3 113 473**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Tzikas, Athanassios, Dr., Muttenzerstrasse 78, CH-4133 Pratteln (CH)**

EP 0 208 331 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere inbezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

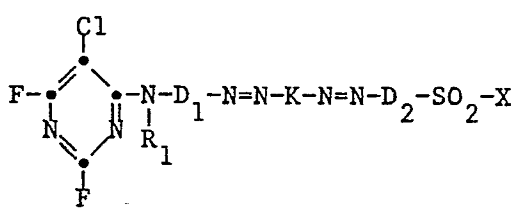

(1),

worin K der Rest einer Kupplungskomponente der Amino-hydroxynaphthalinsulfonsäure-Reihe, $D_1$ der Rest einer in Nachbarstellung zur $H_2N$-Gruppe von K gekuppelten Diazokomponente, $D_2$ der Rest einer in Nachbarstellung zur HO-Gruppe von K gekuppelten Diazokomponente, $R_1$ Wasserstoff oder ein gegebenenfalls substituierter $C_{1-4}$-Alkylrest, und X die Vinyl-, β-Sulfatoäthyl-, β-Thiosulfatoäthyl-, β-Chloräthyl- oder β-Acetoxyäthyl-Gruppe ist.

Die Reste $D_1$ und $D_2$ in Formel (1) können in der üblichen Weise substituiert sein. Als Beispiele für weitere Substituenten an $D_1$ und $D_2$ seien genannt Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Äthylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder brom, Carbamoyl, N-Alkylcarbamoyl mit 1 bis 4 Kohlenstoffatomen im Alkylrest, wie N-Methylcarbamoyl oder N-Äthylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthalten $D_1$ und $D_2$ eine oder mehrere Sulfonsäuregruppen. Die Reaktivfarbstoffe der Formel (1) enthalten als Substituenten vor allem Methyl, Äthyl, Methoxy, Äthoxy, Acetylamino, Benzoylamino, Amino, Chlor, Brom, Ureido, Hydroxy, Carboxy, Sulfomethyl oder Sulfo.

Der Rest $R_1$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, Carboxy oder Sulfo. Als Beispiele für $R_1$ und $R_2$ seien die folgenden Reste genannt: Methyl, Äthyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Äthoxycarbonylmethyl, β-Methoxyäthyl, β-Äthoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $R_1$ Wasserstoff, Methyl oder Äthyl.

Falls zwei $X\text{-}SO_2$-Reaktivreste vorhanden sind, so sind diese insbesondere an den Rest einer Diazokomponente gebunden. Es sind somit z.B. auch trireaktive Farbstoffe in Betracht zu ziehen.

In Betracht zu ziehen sind ferner auch Reaktivfarbstoffe der Formel (1), worin einer der Reaktivreste oder beide über einen Rest der Formel

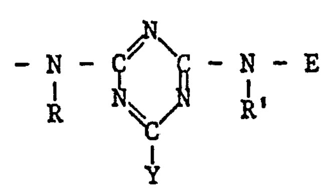

(1a)

an den Chromophor gebunden sind. Dabei ist der Rest $X\text{-}SO_2$- bzw. der 2,4-Difluor-5-chlorpyrimidylaminorest an E gebunden; E ist ein gegebenenfalls substituiertes aliphatisches oder aromatisches Brückenglied. Das Brückenglied E ist vorzugsweise ein Alkylen- oder Arylenrest. So kann E ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Äthylen, Propylen, Butylen, Hexylen oder Cyclohexylen. Als Arylenrest ist E z.B. ein Naphthylenrest, der Rest eines Diphenyls oder Stilbens oder insbesondere ein Phenylenrest. Der Rest E kann weitere Substituenten enthalten, z.B. Halogenatome, wie Fluor, Chlor und Brom, Alkylgruppen mit 1 bis 4 Kohlenstoffatomen, wie Methyl, Äthyl und Propyl, Alkoxygruppen mit 1 bis 4 Kohlenstoffatomen, wie Methoxy, Äthoxy, Propyloxy und Isopropyloxy, Carboxy oder Sulfo. R und R' sind unabhängig voneinander Wasserstoff oder ein gegebenenfalls substituierter $C_{1-4}$-Alkylrest; und Y ist ein Halogenatom, eine gegebenenfalls substituierte Aminogruppe, Hydroxy, eine Alkoxy-, Aryloxy-, Alkylthio- oder Arylthiogruppe.

Bevorzugt sind:

Reaktivfarbstoffe der Formel

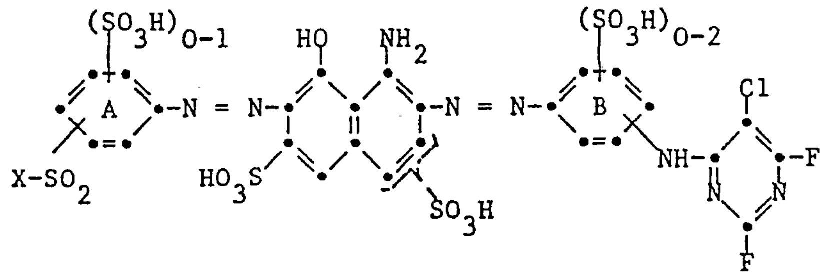

(2),

worin X die unter Formel (1) angegebene Bedeutung hat, und die Benzolringe A und B unabhängig voneinander gegebenenfalls weitersubstituiert sind.

Bevorzugt sind weiterhin Reaktivfarbstoffe der Formel (2), worin die Benzolringe A und B nicht weitersubstituiert sind, und/oder worin X die Vinyl- oder β-Sulfatoäthyl-Gruppe ist.

Das Verfahren zur Herstellung der Reaktivfarbstoffe der Formel (1) ist dadurch gekennzeichnet, dass man Farbstoffe der Formel

$$X\text{-}SO_2\text{-}D\text{-}\underset{\displaystyle R_1}{\underset{|}{NH}} \qquad (3),$$

worin D der unter Formel (1) näher bezeichnete Disazochromophor ist, und $R_1$ und X die unter Formel (1) angegebenen Bedeutungen haben, oder ihre Vorprodukte mit 2,4,6-Trifluor-5-chlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Man geht somit von Farbstoffen aus, die eine $X\text{-}SO_2$-Gruppe bereits enthalten, und acyliert die Gruppe $-N(R_1)H$ mit 2,4,6-Trifluor-5-chlor-pyrimidin; oder man verwendet entsprechende Vorprodukte, z.B. eine Diazokomponente der Formel

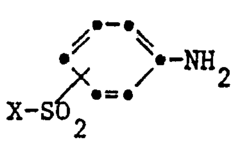

(4),

und kuppelt diese auf eine Kupplungskomponente, welche eine Gruppe $-N(R_1)H$ enthält, und acyliert die Gruppe $-N(R_1)H$ vor oder nach der Kupplung mit 2,4,6-Trifluor-5-chlorpyrimidin. Die acylierbare Gruppe $-N(R_1)H$ ist ebenfalls in einer Diazokomponente vorhanden. Man verwendet als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem 2,4,6-Trifluor-5--chlorpyrimidin durch Verseifen bzw. Reduzieren in die $H_2N$-Gruppe übergeführt wird.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff der Formel (3), worin X ein Rest $HO\text{-}CH_2\text{-}CH_2$- ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin X die Vinylgruppe $H_2C=CH$- ist, und lagert an das Zwischenprodukt Thioschwefelsäure an, wobei ein Rest $HO_3SS\text{-}CH_2CH_2$- entsteht. Die Sulfatierung der Hydroxygruppe in einem Farbstoff der Formel (3) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit 2 Äquivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der Farbstoffe der Formel (3) oder der Farbstoffvorprodukte mit 2,4,6-Trifluor-5-chlorpyrimidin erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Als Farbstoffe der Formel (3) kommen besonders Farbstoffe des folgenden Strukturtyps in Betracht:

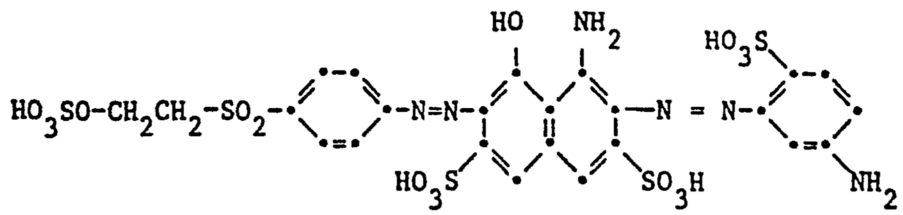

(5).

Geht man zur Herstellung der Reaktivfarbstoffe der Formel (1) nicht von den fertigen Aminofarbstoffen, z.B. solchen die weiter vorn beschrieben sind, sondern von Farbstoffvorprodukten, d.h. den Diazo- und Kupplungskomponenten aus, muss eine der beiden Komponenten mindestens eine acylierbare Aminogruppe und die andere mindestens eine Gruppe X-$SO_2$- aufweisen. Als Diazokomponenten kommen vorwiegend geeignete Verbindungen aus der Aminobenzol- und Aminonaphthalinreihe in Betracht, beispielsweise solche, die in den Azofarbstoffen der oben angegebenen Formeln enthalten sind, wie 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenyl-harnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyl-äthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1,3,5-Triaminobenzol.

Aromatische Amine, die als Diazokomponenten zur Herstellung der Disazofarbstoffe dienen können, und die eine Gruppe der Formel X-$SO_2$- ein- oder zweimal gebunden enthalten, sind z.B.:

1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-β-sulfatoäthylsulfonylbenzol, 1-Amino-2-hydroxy-4-β-sulfatoäthylsulfonylbenzol, 1-Amino-2-hydroxy-5-β-sulfatoäthylsulfonylbenzol-3-sulfonsäure, 1-Amino-2-brom-4-

-β-sulfatoäthylsulfonylbenzol, 1-Amino-2,6-dichlor-4-β-sufatoäthylsulfonylbenzol, 1-Amino-2,4-di-(β-sulfatoäthylsulfonyl)-benzol, 1-Amino-2,4-di-(β-sulfatoäthylsulfonyl)-5-chlorbenzol, 1-Amino-2,4-di-(β-thiosulfatoäthylsulfonyl)-5-chlorbenzol, 1-Amino-2,4-di-(vinylsulfonyl)-benzol, 1-Amino-2,4-di-(vinylsulfonyl)-5-chlorbenzol, 1-Amino-2,4-di-(β-acetoxyäthylsulfonyl)-benzol, 1-Amino-2,4-di-(β-acetoxyäthylsulfonyl)-5-chlorbenzol, 2-Amino-8-β-sulfatoäthylsulfonylnaphthalin, 2-Amino-6-β-sulfatoäthylsulfonylnaphthalin, 2-Amino-6-β-sulfatoäthylsulfonylnaphthalin-1-sulfonsäure, 2-Amino-8-β-sulfatoäthylsulfonylnaphthalin-6-sulfonsäure, 2-Amino-6,8-di-(β-sulfatoäthylsulfonyl)-naphthalin.

Ferner sind zu erwähnen die entsprechenden β-Hydroxy-verbindungen, welche als Vorprodukte verwendet werden können, z.B.: 1-Amino-4-β-hydroxyäthylsulfonylbenzol, 1-Amino-3-β-hydroxyäthylsulfonylbenzol, 1-Amino-2,4-di-(β-hydroxyäthylsulfonyl)-benzol und 1-Amino-2,4-di-(β-hydroxyäthylsulfonyl)-5-chlorbenzol.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben bei der Erläuterung des Verfahrens erwähnt ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Die Kupplungskomponenten sind geeignete Verbindungen der Naphthalinreihe, z.B. Aminonaphtholsulfonsäure. Als Beispiele seien genannt: 2-Amino-5-hydroxynaphthalin-7-sulfonsäure, 1-Amino-8-hydroxynaphthalin-3,6- bzw. -4,6-disulfonsäure, 1-Amino-8-hydroxynaphthalin-4-sulfonsäure.

Die Diazotierung der eine diazotierbare Aminogruppe enthaltenden Zwischenprodukte erfolgt in der Regel durch Einwirkung salpetriger Säure in wässrig-mineralsäurer Lösung bei tiefer Temperatur, die Kupplung bei schwach sauren, neutralen bis schwach alkalischen pH-Werten.

Die Kondensation des 2,4,6-Trifluor-5-chlorpyrimidins mit den Diazokomponenten bzw. mit acylierbaren Monoazo- oder Disazo-Zwischenprodukten bzw. mit den aminogruppenhaltigen Farbstoffen der Formel (3) oder deren Vorprodukten erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der veschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Aus der EP-A-84 314 sind primäre Disazofarbstoffe bekannt, welche Vinylsulfonyl bzw. Sulfatoäthylsulfonyl und 2,4-Difluor-5-chlorpyrimidyl-(6) als Reaktivreste enthalten, wobei diese im Vergleich zu den erfindungsgemässen Farbstoffen in seitenvertauschten Stellungen gebunden sind. Gegenüber den bekannten Farbstoffen zeichnen sich die erfindungsgemässen Farbstoffe durch besseres Färbeverhalten aus.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

*Beispiel 1*

18,8 Teile 1,3-Diaminobenzol-4-sulfonsäure werden in 200 Teile Wasser eingetragen und mit Natriumcarbonat neutralisiert. Bei Raumtemperatur werden innert einer Stunde 16,9 Teile 2,4,6-Trifluor-5-chlorpyrimidin zugetropft. Das pH wird mit 2n NaOH bei 6,5 konstant gehalten und die Temperatur darf nicht über 30°C steigen. Nach beendeter Kondensation wird die feine Suspension filtriert und mit 5% Natriumchloridlösung gewaschen. Das Pressgut wird mit 35 Volumenteilen einer 31%igen wässrigen Salzsäure angesäuert, mit 500 Teilen Eis versetzt und durch langsame Zugabe von 20 Volumenteilen einer wässrigen 5n-Natriumnitritlösung diazotiert. Wie üblich wird danach überschüssige salpetrige Säure mit etwas Amidosulfonsäure zerstört. Sodann wird zur Kupplungsreaktion eine Lösung von 31,9 Teilen 1-Amino-8-naphthol-3,6-disulfonsäure in 500 Teilen Wasser, die mit Salzsäure auf einen pH-Wert von 4 gestellt ist, versetzt. Der pH-Wert der Kupplung wird mit Soda bei 2 bis 3,0 gehalten. Nachdem die erste Kupplungsreaktion beendet ist, wird die gebildete Monoazoverbindung mit einer Diazoniumsalzlösung in der zweiten Kupplungsreaktion umgesetzt. Diese Diazoniumsalzlösung wird wie folgt hergestellt:

Ein Gemisch aus einer neutralen Lösung von 28,1 teilen Anilin-4-β-sulfatoäthylsulfon in 150 Teilen Wasser und 20,3 Volumenteilen einer wässrigen 5n-Natriumnitritlösung wird bei 0 bis 5°C unter Rühren in ein Gemisch aus 26 Volumenteilen einer 31%igen wässrigen Salzsäure und 150 Teilen Eis einlaufen gelassen. Die entstehende Suspension wird noch eine Stunde gerührt und überschüssige salpetrige Säure mit Amidosulfonsäure zerstört. Die Diazoniumsalzsuspension wird sodann mit 17,8 Teilen Natriumbicarbonat auf einen pH-Wert von 5,5 bis 6,5 eingestellt und, wie oben erwähnt, mit der Lösung der Monoazoverbindung bei einem pH-Wert von 5,5 bis 6,5 gekuppelt. Die gebildete Disazoverbindung wird mit Natriumchlorid ausgesalzen, abgesaugt und getrocknet.

Man erhält das Alkalimetallsalz der Verbindung der Formel

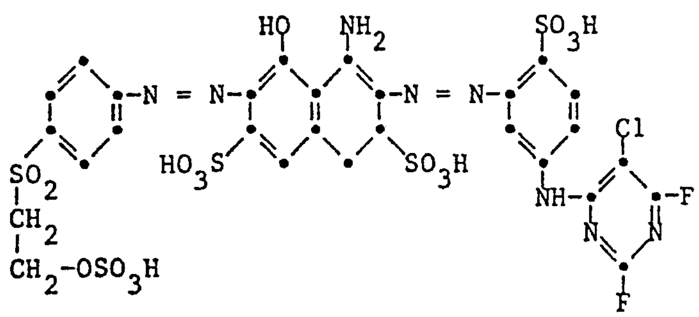

in Form eines schwarzen, elektrolythaltigen Pulvers. Diese Verbindung zeigt sehr gute Farbstoffeigenschaften und liefert nach den in der Technik üblichen Applikations- und Fixierverfahren auf Cellulosefasermaterialien marineblaue Färbungen und Drucke mit sehr guten Gebrauchs- und Fabrikationsechtheiten. Auf Wolle werden aus schwach saurem Bade ebenfalls marineblaue Färbungen erhalten, deren Nassechtheiten nach ammoniakalischer Nachbehandlung ausgezeichnet sind.

Man verfährt in analoger Weise, wie im vorherigen Beispiel beschrieben, zur Herstellung von erfindungsgemässen Disazoverbindungen entsprechend der allgemeinen Formel

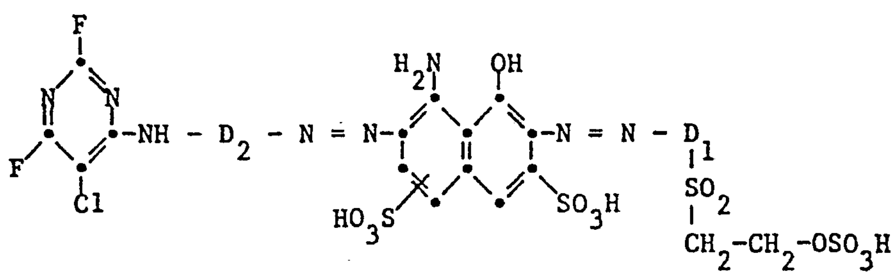

die in den nachfolgenden Tabellenbeispielen durch die angegebenen Formelreste charakterisiert sind, indem man entsprechend zuerst eine Diazokomponente herstellt, die das Reaktionsprodukt von 2,4,6-Trifluor-5-chlorpyrimidin und einer Diaminobenzol-Verbindung ist, diese sodann diazotiert und auf 1-Amino-8-naphthol-3,6- oder -4,6-disulfonsäure kuppelt und darauf die hieraus gebildete Monoazoverbindung mit einem Anilinderivat mit einer β-Sulfatoäthylsulfonylgruppe als zweite Diazokomponente umsetzt. Diese Reaktionskomponenten sind aus den Tabellenbeispielen in Verbindung mit der obigen allgemeinen Formel ersichtlich. Die in diesen Beispielen 2 bis 11 beschriebenen erfindungsgemässen Disazoverbindungen zeigen ebenfalls sehr gute faserreaktive Farbstoffeigenschaften und liefern beispielsweise auf Baumwollmaterialien echte Färbungen mit den in den Beispielen angegebenen Nuancen.

TABELLE

| Bsp. | $D_2$ | $D_1$ | Stellung $HO_3S$- | Farbton auf Baumwolle |
|---|---|---|---|---|
| 2 | 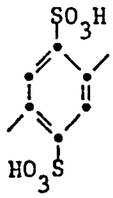 | 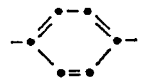 | 3 | grünstichig marineblau |
| 3 | 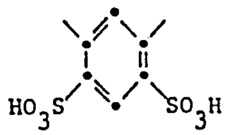 | dito | 3 | marineblau |
| 4 | 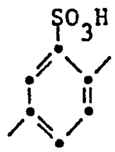 | 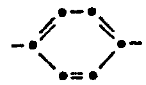 | 3 | marineblau |
| 5 | dito | dito | 4 | marineblau |
| 6 | 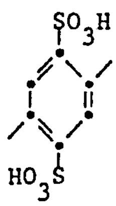 | 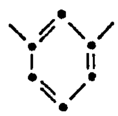 | 3 | grünstichig marineblau |
| 7 | 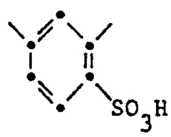 | 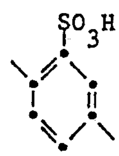 | 3 | marineblau |
| 8 | 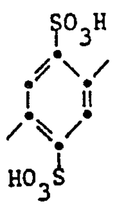 | 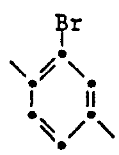 | 3 | grünstichig schwarz |
| 9 | 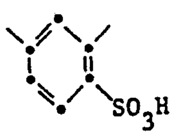 | 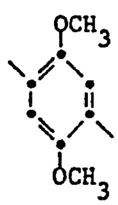 | 3 | grünstichig schwarz |
| 10 | 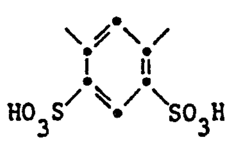 | 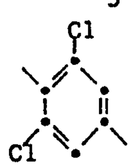 | 3 | schwarz |
| 11 | 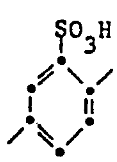 | 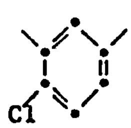 | 3 | schwarz |

**Patentansprüche**

1. Reaktivfarbstoffe der Formel

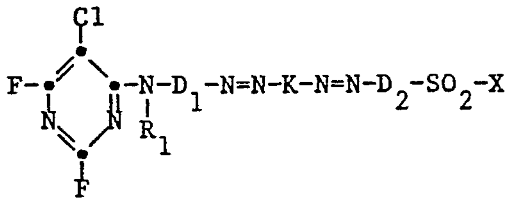 (1),

worin K der Rest einer Kupplungskomponente der Amino-hydroxynaphthalinsulfonsäure-Reihe, $D_1$ der Rest einer in Nachbarstellung zur $H_2N$-Gruppe von K gekuppelten Diazokomponente, $D_2$ der Rest einer in Nachbarstellung zur HO-Gruppe von K gekuppelten Diazokomponente, $R_1$ Wasserstoff oder ein gegebenenfalls substituierter $C_{1-4}$ -Alkylrest, und X die Vinyl-, β-Sulfatoäthyl-, β-Thiosulfatoäthyl-, β-Chloräthyl- oder β-Acetoxyäthyl-Gruppe ist.

2. Reaktivfarbstoffe gemäss Anspruch 1, der Formel

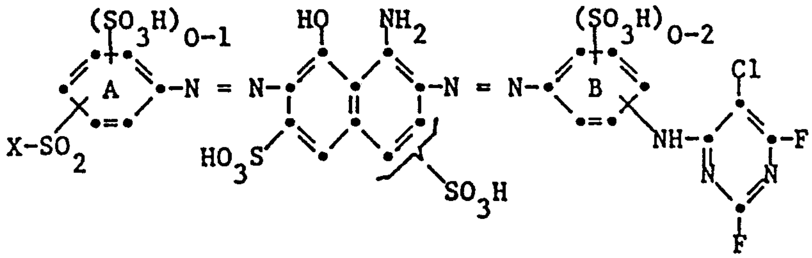 (2),

worin X die in Anspruch 1 angegebene Bedeutung hat, und die Benzolringe A und B unabhängig voneinander gegebenenfalls weitersubstituiert sind.

3. Reaktionsfarbstoffe gemäss Anspruch 2, worin die Benzolringe A bzw. B nicht weitersubstituiert sind.

4. Reaktivfarbstoffe gemäss Anspruch 3, worin X die Vinyl- oder β-Sulfatoäthyl-Gruppe ist.

5. Verfahren zur Herstellung von Reaktivfarbstoffen gemäss Anspruch 1, dadurch gekennzeichnet, dass man Farbstoffe der Formel

$X-SO_2-D-NH$
|
$R_1$ (3),

worin D der in Anspruch 1 näher bezeichnete Disazochromophor ist, und $R_1$ und X die in Anspruch 1 angegebenen Bedeutungen haben, oder ihre Vorprodukte mit 2,4,6-Trifluor-5-chlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

6. Verwendung der Reaktivfarbstoffe gemäss Anspruch 1, zum Färben oder Bedrucken von cellulosehaltigen Fasermaterialien.

7. Verwendung gemäss Anspruch 6, zum Färben oder Bedrucken von Baumwolle.

**Claims**

1. Reactive dyes of the formula

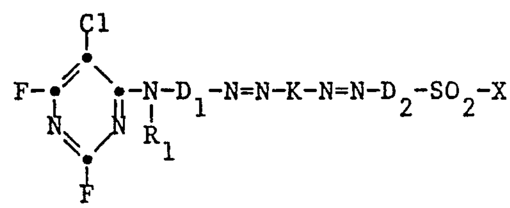 (1)

in which K is the radical of a coupling component of the aminohydroxynaphthalenesulfonic acid series, $D_1$ is the radical of a diazo component coupled in the adjacent position relative to the $H_2N$ group of K, $D_2$ is the radical of a diazo component coupled in the adjacent position relative to the HO group of K, $R_1$ is hydrogen or an unsubstituted or substituted $C_{1-4}$alkyl radical, and X is a vinyl-, β-sulfatoethyl, β-thiosulfatoethyl, β-chloroethyl or β-acetoxyethyl group.

2. Reactive dyes according to claim 1 of the formula

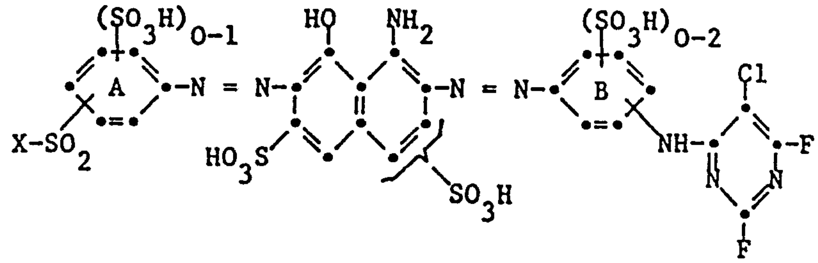 (2),

in which X is as defined in claim 1, and the benzene rings A and B, independently of each other, can be further substituted.

3. Reactive dyes according to claim 2 in which the benzene rings A und B are not further substituted.

4. Reactive dyes according to claim 3 in which X is the vinyl or β-sulfatoethyl group.

5. Process for preparing reactive dyes according to claim 1, which comprises reacting dyes of the formula

$$X\text{-}SO_2\text{-}D\text{-}NH(R_1) \quad (3),$$

in which D is the disazo chromaphore defined in more detail in claim 1, and $R_1$ and X are as defined in claim 1, or their precursors, with 2,4,6-trifluoro-5-chloropyrimidine to reactive dyes of the formula (1), or converting the resulting intermediates into the desired end dyes, and if desired subsequently carrying out a further conversion reaction.

6. Use of the reactive dyes according to claim 1, for dyeing and printing cellulose-containing fibre materials.

7. Use according to claim 6 for dyeing or printing cotton.

**Revendications**

1. Colorants réactifs de formule

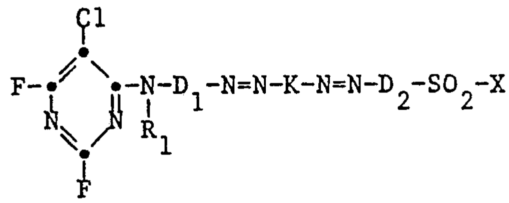

(1)

dans laquelle K représente le reste d'un composant de copulation de la série acide amino-hydronaphthalènesulfonique, $D_1$ représente le reste d'un composant diazo copulé en position voisine du groupe $NH_2$ de K, $D_2$ représente le reste d'un composant diazo copulé en position voisine du groupe OH de K, $R_1$ représente un atome d'hydrogène ou un groupe alkyle en $C_{1-4}$ éventuellement substitué, et X représente le groupe vinyle, β-sulfatoéthyle, β-thiosulfatoéthyle, β-chloroéthyle ou β-acétoxyéthyle.

2. Colorants réactifs conformes à la revendication 1, de formule

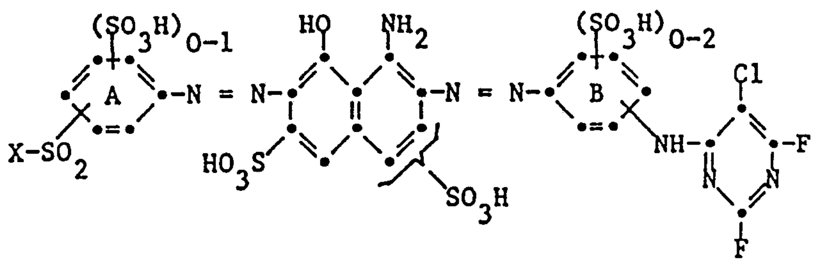

(2)

dans laquelle X a la signification indiquée dans la revendication 1, et les noyaux benzéniques A et B, indépendamment l'un de l'autre, sont éventuellement substitués davantage.

3. Colorants réactifs conformes à la revendication 2, dans lesquels les noyaux benzéniques A ou B ne sont pas substitués davantage.

4. Colorants réactifs conformes à la revendication 3, dans lesquels X représente le groupe vinyle ou β-sulfatoéthyle.

5. Procédé de préparation des colorants réactifs conformes à la revendication 1, caractérisé en ce qu'on fair réagir des colorants de formule

$$X\text{-}SO_2\text{-}D\text{-}NH(R_1) \quad (3),$$

dans laquelle D est le chromophore disazoïque mieux représenté dans la revendication 1, et $R_1$ et X ont les significations indiquées dans la revendication 1, ou leurs précurseurs, avec la 2,4,6-trifluoro-5-chloropyrimidine, pour donner des colorants réactifs de formule (1), ou l'on transforme les produits intermédiaires obtenus en les colorants finals souhaités, et on effectue éventuellement une autre réaction de conversion.

6. Utilisation des colorants réactifs conformes à la revendication 1 pour la teinture ou l'impression de matériaux fibreux cellulosiques.

7. Utilisation conforme à la revendication 6 pour la teinture ou l'impression de coton.